# EUROPÄISCHE PATENTANMELDUNG

(11) **EP 1 657 496 A2**
(43) Veröffentlichungstag der Anmeldung: **17.05.2006**
(21) Anmeldenummer: 05021242.2
(22) Anmeldetag: 29.09.2005
(51) Int. Cl.: F24D 3/14

(54) **Innenwandaufbau zur Innendämmung**

(30) Priorität: 15.10.2004 DE 102004050207
(71) Anmelder: Haase, Werner, 97753 Karlstadt (DE)
(72) Erfinder: Haase, Werner, 97753 Karlstadt (DE)
(74) Vertreter: Pöhner, Wilfried Anton, Dr.

(57) **Zusammenfassung**

Innenwandaufbau zur innenseitigen Dämmung von Gebäudeaußenwänden sowie von Gebäudewänden, die temperierte Gebäudebereiche von nicht temperierten Gebäudebereichen abgrenzen, wobei, dass eine Innendämmung, auf der Innenseite der Außenwand anliegt, und eine Innenwandschicht auf der in Richtung des temperierten Gebäudeteils zeigenden Seite der Innendämmung anliegt, wobei sich innerhalb der Innenwandschicht eine Vielzahl von Rohren befinden, die mit einem flüssigen Heiz- oder Kühlmedium beaufschlagbar sind, und dass die Innendämmung aus einem diffusionsoffenen und kapillaraktiven Material besteht. Desweiteren betrifft die Erfindung ein Verfahren zu Bausanierung sowie ein Verfahren zur Herstellung von dämmenden Bauelementen.

## Beschreibung

Die Erfindung betrifft einen Innenwandaufbau zur innenseitigen Dämmung von Gebäudeaußenwänden sowie von Gebäudewänden, die temperierte Gebäudebereiche von nicht temperierten Gebäudebereichen, abgrenzen. Des weiteren betrifft die Erfindung im Verfahren zur nachträglichen Dämmung im Rahmen von Bausanierungen sowie ein Verfahren zur Herstellung innengedämmter Wandelemente im Fertighausbau.

Die Fassaden von denkmalgeschützten Gebäuden dürfen nur unter Einhaltung der Vorschriften des Denkmalschutzes verändert werden. Da eine flächige Anbringung einer Außendämmung dieser in der Regel sehr schlecht gedämmter Gebäude nicht in Frage kommt, bleibt nur die Dämmung der Außenwände auf der in das Gebäudeinnere gerichteten Innenseite. Das gleiche gilt, wenn die nachträgliche Außendämmung wegen nur mit großem Aufwand demontierbarer Fassadenelemente nicht in Frage kommt.

Eine Innendämmung ist bauphysikalisch, im Gegensatz zur Außendämmung, nach dem bisherigen Stand der Technik und Erkenntnisstand grundsätzlich kritisch zu betrachten, da es aufgrund der Temperatur- und Feuchtespreizung im Winter (innen warm bei hoher Luftfeuchtigkeit, dagegen außen kalt bei niedriger Luftfeuchte) bei Abfall der Temperatur unter den Taupunkt zur Kondensation der von außen in den Wandaufbau eingedrungenen Luftfeuchtigkeit kommen kann. Tauwasser ist eine der häufigsten Ursachen für Bauschäden, wobei zunehmend auch deren gesundheitsgefährdendes Potential zunehmend erkannt wird.

Nach dem Stand der Technik wird daher bislang bei einer Innendämmung eine Dampfsperre angebracht. Dabei handelt es sich um eine flüssigkeitsdichte Schicht, beispielsweise um eine Folie aus Polyethylen, die das Eindringen des Tauwassers in angrenzende Wandschichten verhindert. Allerdings ist die vollkommen feuchtigkeitsdichte Ausführung einer Dampfbremse besonders bei Altbausanierungen aufwendig und fehleranfällig. So ist in manchen Randbereichen (Durchdringungen, Bauteilanschlüsse) eine Dampfsperre ohnehin kaum ordnungsgemäß zu bewerkstelligen.

Aus dem Stand der Technik ist außerdem bekannt, dass geringe Tauwassermengen durch kapillaraktive Baustoffe, die beispielsweise aus Calciumsilikat bestehen, gebunden werden können. Bei abnehmender Luftfeuchtigkeit wird die im Dämmstoff gespeicherte Feuchtigkeit wieder abgegeben. Ohne zusätzliche Maßnahmen bleibt die Notwendigkeit zum Einbau einer Dampfsperre jedoch auch bei Nutzung dieser vorteilhaften Puffereigenschäften der Dämpfstoffe bestehen.

Die Aufgabe der Erfindung besteht vor diesem Hintergrund in der Konstruktion eines Innenwandaufbaus mit dämmender Wirkung, insbesondere für außenseitig nicht gedämmte Gebäudewände, wobei durch das Zusammenwirken der verschiedenen Schichten des Innenwandaufbaus die Entstehung von Tauwasser vermindert öder ganz ausgeschlossen werden soll, so dass in jedem Fall auf den Einsatz einer Dampfsperre verzichtet werden kann.

Die Lösung der Aufgabe erfolgt durch die Konstruktion eines Innenwandaufbaus, der dadurch ekennzeichnet ist, dass
- eine Innendämmung, auf der Innenseite der Außenwand anliegt, und
- eine Innenwandschicht auf der in Richtung des temperierten Gebäudeteils zeigenden Seite der Innendämmung anliegt, wobei
   -sich innerhalb der Innenwandschicht eine Vielzahl von Rohren befinden, die mit einem flüssigen Heiz- oder Kühlmedium beaufschlagbar sind, und dass
- die Innendämmung aus einem diffusionsoffenen und kapillar-aktiven Material besteht.

Der erfindungsgemäße Innenwandaufbau besteht also aus drei Schichten. Dies sind die Außenwand und auf deren Innenseite nacheinanderfolgend die Innendämmung und die Innenwandschicht anliegen. Wesentlich ist, dass die Innenwandschicht funktionalisiert ist durch die Vielzahl der in dieselbe eingelassenen Rohre. Diese dienen zum flächigen Heizen oder Kühlen der Innenwandschicht, wobei die flächige Änderung der Oberflächentemperatur der Innenwandschicht zu einem besonders angenehmen Raumklima beiträgt.

Zur Diffusion von Wasserdampf zwischen dem Gebäudeinneren und der das Gebäude umgebenden Atmosphäre durch die Gebäudewand kommt es aufgrund von Partialdruckunterschieden zwischen beiden Seiten. Die von der Porengröße des Baumaterial und anderen Variablen abhängigen Mechanismen des Wasserdampftransports sind komplex und müssen zum Verständnis der Erfindung nicht im Detail näher analysiert werden. Wesentlich in diesem Zusammenhang ist jedoch, die Abhängigkeit der Wasserdampf-Diffusionswiderstandszahl (µ) bei hygroskopischen porösen Materialien von der relativen Luftfeuchte, die wiederum von der Temperatur abhängt.

Die Wasserdampf-Diffusionswiderstandszahl (µ) ist eine Stoffeigenschaft, die angibt um welchen Faktor der Diffusionswiderstand des betrachteten Baumaterials größer ist als der einer gleich dicken, ruhenden Luftschicht gleicher Temperatur. In Experimenten konnte gezeigt werden, dass die Wasserdampfdurchlässigkeit mit steigender, über dem Porenquerschnitt gemittelter, relativer Luftfeuchte stark zunimmt. Dabei konnte nachgewiesen werden, dass das in den Poren sorbierte Wasser für den ermittelten Anstieg der Wasserdampfdurchlässigkeit verantwortlich ist. Der Feuchtigkeitszustand des Mauerwerks hat somit nachweislich einen Einfluss auf den Wasserdampftransport durch das Mauerwerk. Die Analyse der Mechanismen, die diesen Beobachtungen zugrunde liegen, ist noch Gegenstand wissenschaftlicher Untersuchungen. Die Erwärmung der Innenwandschicht führt natürlich auch zu einer Senkung er der relativen Luftfeuchte innerhalb derselben.

Der Kerngedanke der Erfindung besteht im kombinierten Einsatz einer kapillaraktiven und diffusionsoffenen Innendämmung, die beispielsweise aus Mineralschaumstein bestehen kann, mit einer Kapillarrohrheizung, die eingebettet in eine ebenfalls kapillaraktive und diffusionsoffene Putzschicht auf der in das Gebäudeinnere gerichteten Seite der Innendämmung anliegt. Durch die Kombination der Schichten in der beschriebenen Reihenfolge wird die unter dem Einfluß der Kapillarrohrheizung geringere Wasserdampfleitfähigkeit der Innernwandschicht, die als flächige Dampfbremse wirkt, vorteilhaft ausgenützt.

Bei kühlen Außentemperaturen bewirkt die flächig gewärmte und daher trockene, d.h. eine geringe Luftfeuchtigkeit aufweisende, Innenwandschicht gegenüber der sich im Gebäudeinneren befindlichen erhöhten Wasserdampfkonzentration wie eine Barriere, welche die Passage des Wasserdampfs in die der Außenwand zugewandten kühleren Bereiche des Innenwandaufbaus abschwächt, so dass der Dampfdruck sich innerhalb des Innenwaridaufbaus verringert und der Sättigungsdampfdruck nicht mehr erreicht wird. Die Kondensation des vorhandenen Wasserdampfes wird nun gar nicht oder erst bei niedrigeren Temperatur erfolgen. Die Taupunktabsenkung kann beim erfindungsgemäßen Wandaufbau bis zu 4°C betragen. Diese Differenz erlaubt es, dass der Dämmungsaufbau ohne den Einbau einer kostenaufwendigen Dampfsperre erfolgen kann.

Zur Aufnahme der dennoch in den Innenwandaufbau eindringenden Restfeuchte, bzw. für das bei extrem tiefen Außentemperaturen entstehende Tauwasser, dient die zwischen der temperierbaren Innenwandschicht und der Außenwand liegende Innendämmung, die insbesondere aufgrund ihrer Kapillaraktivität als Puffer (Feuchtepufferwirkung) wirkt. Die Innendämmung trägt durch die zeitweise Bindung von Wasserdampf oder Feuchtigkeit zusätzlich zu einer vorteilhaften Absenkung des Taupunktes bei.

Die beschriebenen vorteilhaften Änderung der bauphysikalischen Größen eines Wandaufbaus, die auf den Einbau einer Kapillarrohrheizung zurückzuführen sind, werden bislang bei der Berechnungen des Taupunkts, beispielsweise nach dem Glaser-Verfahren nicht berücksichtigt.

Beim Einsatz von Kapillarrohren mit ovalem Querschnitt, hat deren Orientierung bezüglich der Oberfläche der Putzschicht in Hinblick auf den Kerngedanken der Erfindung eine wesentliche Bedeutung. Die Ausrichtung des Rohrquerschnitts mit der größeren Ausdehnung senkrecht zur Oberfläche der Innenwandschicht führt zu einer Umlenkung der von den Kapillarrohren abgegebenen Wärme bzw. Kälte um 90°, so dass eine derart gleichmäßig beheizte oder gekühlte Innenwandschicht als einheitlich temperiertes Wärme- bzw. Kälteschild wirkt. Die in den diffusionsoffenen Innenputz eingelassenen Kapillarrohre reduzieren zum einen die Entstehung von Tauwasser im Innenwandaufbau und erhöhen zugleich im Heizfall auch die Verdunstung der Feuchtigkeit, welche in die diffusionsoffene Putz- oder Lehmschicht eindringen konnte.

Vor diesem Hintergrund kann bei der erfindungsgemäßen Kombination einer in eine Putz- oder Lehmschicht eingelassenen Kapillarrohrheizung mit einer diffusionsoffenen Innendämmung unter Ausnützung der Abhängigkeit der Dampfleitfähigkeit von Kalk und insbesondere von Lehm von der Temperatur von einem Synergie-Effekt bezüglich der Taupunkt-Absenkung und der Vermeidung von Tauwasserschäden gesprochen werden.

Darüber hinaus ist der erfindungsgemäße Innenwandaufbau mit einer nachweisbaren Einsparung von Energiekosten verbunden. Die Energieeinsparung liegt im wesentlichen in der reduzierten Wärmetransmission aber auch in der flächigen Strahlungswärme begründet. Im Hinblick auf die Energiekosten ist insbesondere vorteilhaft, dass die Beheizung der Kapillarrohre aufgrund ihrer großflächigen Verwendung auch mit einem Niedertemperatur-Heizung erfolgen kann.

Da für die Innendämmung verschiedene Materialien, d.h. Mineralschaumstein, Gasbeton, der auch als Porenbeton bezeichnet wird, oder ein Tonbaustoff mit poröser Struktur oder eine Mischung der genannten Materialien in Frage kommen, begründet die Natur der Innendämmung eine Vielzahl verschiedener Ausführungsformen des Wandaufbaus. Die poröse Struktur ist allen für die Innendämmung in Frage kommenden Materialien eigen, denn die poröse Struktur ist eine der Voraussetzungen für die diffusionsoffenen und käpillaraktiven Eigenschaften der Materialien.

Als besonders geeignetes Material zum Aufbau der Innendämmung im Zusammenhang mit dem erfindungsgemäßen Innenwandaufbau haben sich Mineralschaumsteine erwiesen, die aus einem Gemisch von Siliziumoxid und Silikatmineralien bestehen. Bei den in Frage kommenden Silikatmineralien handelt es sich im Wesentlichen um Alkalisilikate und Erdalkalisilikate sowie um Aluminiumoxidsilikate oder um Ammoniumsilikate. Diese weisen bei Diffusionsoffenheit und Kapillaraktivität gleichzeitig eine hohe Wärmedämmung, d.h. eine geringe Wärmeleitzahl auf. Darüberhinaus zeichnet sich Mineralschaumstein auch durch eine sehr gute Feuchtepufferwirkung aus.

Mit der Feuchtepufferwirkung wird das Vermögen eines Baustoffes bezeichnet, die in einem Raum auftretenden Feuchtigkeitsspitzen, die aus der Raumnutzung resultieren, abzudämpfen. Gut geeignet zur Feuchtepufferwirkung sind Stoffe, deren Sorptionsisotherme im relevanten Feuchtebereich, d.h. zwischen etwa 40 % und 80 % relativer Luftfeuchte einen signifikanten Anstieg besitzen. Die durch die Versammlung von Menschen verursachte Feuchtemenge wird von der Konstruktion aufgenommen und gespeichert. Nach Beendigung derVeranstaltung und der Normalisierung des Raumklimas kann die gespeicherte Feuchte wieder an den Raum abgeben werden

Die Feuchtepufferwirkung der Innendämmung und auch die der Innenwandschicht, die neben der Kapillaraktivität auch auf der Diffusionsoffenheit der Baustoffe beruht, wird durch die über die Rohrheizung erfolgende Wärmezufuhr abgeschwächt, aber vorteilhafterweise nicht gänzlich ausgeschaltet.

Es ist daher wesentlich für die Erfindung, dass auch die Innenwandschicht aus einem diffusionsoffenen und/oder kapillaraktiven Material besteht. Darüber hinaus soll die Innenwandschicht aber zur schnellen Weiterleitung der durch die Rohrheizung übertragenen Wärme bzw. Kälte aus einem Material mit nicht zu geringer Wärmeleitfähigkeit bestehen. Kalkputz und Lehmputz erfüllen diese Voraussetzungen auf geradezu ideale Weise. Insbesondere Lehm hat neben seiner hohen Wärmespeicherfähigkeit eine hohe Feuchtepufferwirkung (die Feuchtigkeitsaufnahme von Ziegeln zu Lehmsteinen verhält sich beispielsweise etwa wie 1:30). Außerdem haben die im Lehm befindlichen Tonmineralien schadstoffabsorbierende bzw. desinfizierende Eigenschaften. Diese Eigenschaften erlauben es, dass eine Innenwandschicht aus Lehm auf geradezu ideale Weise zu einem gesunden Wohnklima beiträgt. Die Putzdeckung der Innenwandschicht bezüglich der Heizrohre beträgt zur Gewährleistung einer schnellen Reaktionszeit bei der Wärmeübertragung etwa 5 mm.

In einer Weiterbildung des erfindungsgemäßen Innenwandaufbaus ist vorgesehen, dass die Innenwandschicht zur Stabilisierung der Innenwandschicht elastische Fasern mit möglichst hoher Festigkeit enthält. Als geeignetes Material kommt beispielsweise Zellstoff in Frage. Prinzipiell ist auch denkbar, dass die Faser aufgrund guter Wärmeleitfähigkeit zur gleichmäßigen Verteilung der durch die Kapillarrohre der Flächenwandheizung abgegebenen Wärme beitragen.

Es liegt im Rahmen der Erfindung, dass die vom Material der innenwandschicht umgegebenen Rohre vorzugsweise Kapillarrohre sind, die als Flächenheizung installiert werden. Zur möglichst gleichmäßigen und intensiven Erwärmung der Innenwandschicht weisen die eingesetzten Kapillarrohre einen ovalen Querschnitt auf. Dadurch wird die zur Übertragung der Wärme des Heizmediums zur Verfügung stehende Oberfläche vergrößert. Zur gleichmäßigen Temperierung der als Temperaturschild dienenden Innenwandschicht ist vorgesehen, dass der, Rohrquerschnitt mit der größeren Ausdehnung jeweils senkrecht zur Oberfläche der Innenwandschicht ausgerichtet ist.

Für die Anordnung der als Flächenheizung dienenden Kapillarrohre gibt es verschiedene Möglichkeiten. Die mit ihren Längsachsen parallel zueinander angeordneten Kapillarrohre können beispielsweise obenends und untenends mit horizontal ausgerichteten Verteilerbzw. Sammelrohren verbunden sein. Die Verbindung zwischen den vertikal verlaufenden Kapillarrohren und den horizontal verlaufenden Sammel- bzw. Verteilerrohr muss natürlich jeweils den Durchfluss des Heiz- bzw. Kühlmediums erlauben.

Prinzipiell ist auch denkbar, dass zwischen den parallel zueinander ausgerichteten Kapillarrohren wärmeleitende Verbindungen geschaffen werden, so dass die Flächenheizung eine mattenartige Struktur bekommt und dadurch zur Stabilisierung und zusätzlich zur gleichmäßigen Temperierung der Innenwandschicht beträgt. Die Schaffung durchflussoffener Querverbindungen ist zwar fertigungstechnisch sehr anspruchsvoll hat, hätte aber den Vorteil, dass die Wärmeausbreitung innerhalb der Innenwandschicht auch in vertikaler Richtung erfolgt. Entsprechend dem Kerngedanken der Erfindung ist die möglichst einheitliche Temperierung der Innenwandschicht eine wichtige Voraussetzung für die flächige Herabsetzung der Diffusionsoffenheit derselben.

Da die gleichmäßige Temperierung der Innenwandschicht eine so zentrale Bedeutung für den erfindungsgemäßen Innenwandäufbau hat, gilt natürlich prinzipiell, dass die Beabstandung der Kapillarrohre so bemessen ist, dass die sie umgebende Innenwandschicht mit einheitlicher Temperatur temperierbar ist. Auch die Stärke der Innenwandschicht soll so bemessen sein, dass diese mit Hilfe der eingebrachten Kapillarrohre gleichmäßig temperierbar ist. Abgesehen von diesen Anforderungen ist die Stärke der Innenwandschicht nicht zwingend vorgegeben.

In einer bevorzugten Ausführungsform ist vorgesehen, dass die Stärke der Innendämmung jedoch mindestens der dreifachen Stärke der Innenwandschicht entspricht. Bei dieser Relation ist sichergestellt, dass die bei der Aufnahme von Feuchtigkeit auch als Puffer dienende Innendämmung die von der Innenwandschicht nicht zurückgehaltene Luftfeuchtigkeit aus dem Gebäudeinneren zeitweise aufnehmen kann.

Da die in der Regel als Flächenheizungselemente verlegbaren Kapillarrohre im Decken- und Bodenbereich sowie in den die Fensterrahmen umgebenden Bereichen nicht oder nur schwer installierbar sind, ist vorgesehen, dass in diesen Bereichen zusätzliche Rohre angebracht werden. Der Innendurchmesser dieser Rohre übersteigt den Innendurchmesser der Kapillarrohre um das mindestens Fünffache. Die zusätzlichen Rohre haben dadurch eine größere, für die Abgabe der Wärme zu Verfügung stehende, Oberfläche und müssen daher nicht so dicht nebeneinander verlegt werden. Ein weiterer Grund für den größer bemessenen Innendurchmesser der zusätzlichen Rohre ist jedoch, dass diese eingangsseitig mit dem Rücklauf der Kapillarrohre verbunden sind und deshalb im Heizfall das Wasser aus dem Rücklauf der Kapillarrohrer deutlich abgekühlt sein dürfte.

In einer Weiterbildung der Erfindung ist vorgesehen, dass die Vorlauftemperatur des Mediums mit dem die Kapillarrohre beaufschlagt werden, in Abhängigkeit von der Temperatur des rücklaufenden Mediums regelbar ist. So ist beispielsweise denkbar, dass mit einer entsprechenden Steuerung neben der erwünschten Raumtemperatur auch die Temperatur des Rücklaufs, als Untergrenze, variabel festlegbar ist. Beispielsweise ist denkbar, dass die Temperatur des Vortaufs max. 40° C und die Temperatur des Rücklaufs max. 25° C beträgt. Aufgrund des ohnehin zu erfüllenden Erfordernisses der flächigen Anbringung der Kapillarrohre kann die Wandheizung mit einer Wärmepumpe betrieben werden, wobei die Temperatur des Vorlaufs in diesem Fall max. 40° C beträgt. Zur Erwärmung bzw. zur Kühlung des durch die Kapillarrohre strömenden Mediums eignen sich auf besonders vorteilhafte Weise tief in das Erdreich eingelassene Sonden, durch die das Medium zum Wärmeaustausch fließt.

Als Material für die Kapillarrohre kommt Kunststoff und, aufgrund seiner hohen Wärmeleitfähigkeit, Kupfer in Frage. Als Heiz- oder Kühlmedium empfiehlt sich aus Kostengründen und im Interesse des Umweltschutzes Wasser.

Die mechanische Befestigung der Kapillarrohre erfolgt mit Hilfe von im Baugewerbe üblichen Vorrichtungen wie beispielsweise von Bändern. Zur weiteren Verbesserung der gleichmäßigen Temperierung der Innenwandschicht besteht die Möglichkeit, dass zur Vergrößerung der für den Wärmeaustausch zur Verfügung stehenden Fläche auf den Außenseiten der Kapillarrohre eine Vielzahl von stabförmigen oder dornenartigen Fortsätzen befestigt sind. Die in die Innenwandschicht parallel zur Wandoberfläche eingreifenden Fortsätze können zur Erhöhung der Stabilität auch ankerartig geformt sein. Die Fortsätze sollten eine möglichst große Öbecfläche aufweisen und aus einem Material mit hoher Wärmeleitfähigkeit, wie beispielsweise Kupfer, bestehen.

Natürlich liegt es im Rahmen der Erfindung, dass die Bestandteile des Innenwandaufbaus, erst nachdem diese fabrikmäßig vorgefertigt wurden, an den Ort der Baustelle transportiert werden. Das gilt sowohl für die Anbringung von plattenartigen Bauelementen im bereits bestehenden Gebäuden sowie für die Fertigung von Wandelementen im Fertighausbau.

Die Erfindung betrifft außerdem ein Verfähren zur Bausanierung, insbesondere von Gebäuden mit denkmalgeschützten Fassaden oder von Gebäuden, für die eine nachträgliche Außendämmung nicht oder nur unter großem Kostenaufwand möglich wäre, unter Verwendung eines Innenwandaufbaus der vorbeschriebenen Art.

Zur Anbringung des Innenwandaufbaus bei bereits bestehenden Gebäuden wird zunächst auf der Innenseite der Außenwand eine Innendämmung der vorgeschriebenen Art angebracht. Daraufhin wird auf der in das Rauminnere zeigenden Seite der Innendämmung eine Vielzahl von Rohren, insbesondere von Kapillarrohren, die zu einer Flächenheizung zusammengefasst sind, angebracht werden. Abschließend wird das aushärtbare Material der Innenwandschicht, das vorzugsweise aus Lehm- oder Kalkputz besteht, aufgetragen, bis die Kapillarrohre überdeckt sind.

Zur Steuerung der Temperierung der Innenwandschicht ist ein Verfahren vorgesehen, das dadurch gekennzeichnet ist, dass die Vorlauftemperatur des Mediums und der im Decken- und Bodenbereich zusätzlich angebrachten Rohre in Abhängigkeit von der Temperatur des rücklaufenden Heiz- oder Kühlmediums geregelt wird. Dabei ist vorgesehen, dass die Rücklauftemperatur variabel festgelegt werden kann.

Die Kapillarrohre weisen vorzugsweise einen Innendurchmesser von ca. 1 mm auf. Zur Sicherstellung der gleichmäßigen Temperierung/Trocknung der Innenwandschicht darf der Abstand der parallel zueinander verlaufenden Kapillarrohre nicht zu groß sein. Bei einem Innendurchmesser von 1 mm wird bei zueinander parallel verlaufenden Kapillarrohren ein Abstand von maximal 3 cm empfohlen.

In einer bevorzugten Ausführungsform ist vorgesehen, dass die Kapillarrohre Ovalform aufweisen. Wird die eher länglich ausgeprägte Seite der Kapillarrohre senkrecht zur Oberfläche der zur Raummitte hinzeigenden Innenraumschicht ausgerichtet, erreicht man vorteilhafterweise, dass die Wärmeabgabe der Kapillarrohre im Wesentlichen parallel zur Innenwandschicht erfolgt. Das die Innenwandschicht bildende Putzmaterial wird so die Zwischenräume zwischen den Röhren gleichmäßig erwärmt bzw. gekühlt. Die Vermeidung von Temperaturgradienten innerhalb der Innenwandschicht stellt sicher, dass die Wirkung der Putzschicht als Dampfbarriere einheitlich ist. Außerdem erfolgt die Wärme- oder Kälteabgabe an den Innenraum aufgrund der großen Fläche gleichmäßig. Die Großflächigkeit gewährleistet im Gegensatz zu Heizkörpern einen großen Wärmefluss als Strahlungswärme. Während Heizkörper, die kaum im Niedertemperaturbetrieb fahrbar sind, gewährleistet eine Kapillarrohrheizung, dass z.B. auch an den nahe an der Wand gelegenen Arbeitsplätzen ein angenehmes Arbeitsklima herrscht.

Im Rahmen der Erfindung ist vorgesehen, dass die im Decken- und Bodenbereich sowie in den zwischen den Fenstern liegenden Wandbereiche mit Rohren versehen werden, die einen größeren Ihnendurchmesser als die Kapillarrohre aufweisen. Die ebenfalls von dem Heiz- oder Kühlmedium durchströmten Rohre weisen vorzugsweise einen Innendurchmesser von 8-10 mm auf.

In einer Weiterbildung werden die zusätzlichen Kupferrohre durch das Heiz- oder Kühlmedium, das von den Kapillarrohren zurückfließt beaufschlagt. Diese Maßnahme wird bewusst gewählt, weil die Heizoder Kühlwirkung des Mediums aufgrund der größeren Oberfläche der Rohre größer ist als bei den Kapillarrohren. Das im Rücklauf in der Regel deutlich von der Temperatur des Zulaufs abweichende Medium wird durch diese Anordnung der Rohre optimal ausgenutzt.

Die Möglichkeit zur Einstellung der Temperatur des Vortaufs in Abhängigkeit von der Temperatur des Rücklaufs ermöglicht auch, dass Kapillarheizungen, die an der Innenseite von Gebäudeaußenwänden mit stark unterschiedlicher Sonnenexposition befestigt sind, aufeinander abgestimmt regulierbar sind. Der Einsatz des erfindungsgemäßen Innenwandaufbaus ist vorteilhafterweise mit einem enormen Kosteneinsparungspotential verbunden. Insbesondere die nachträgtiche Isolierung von Gebäuden, deren Außenseiten mit fassadenbildenden Elementen versehen sind, die nur unter großem Arbeitsaufwand abnehmbar sind, wird auf diese Weise erst wirtschaftlich. Die Kosten zur Installation des erfindungsgemäßen Innenwandaufbaus sind deutlich geringer als die für die Demontage und Neumontage der fassadenbildenden Elemente anfallenden Kosten, falls eine nachträgliche Isolierung des Gebäudes auf der Außenseite unterhalb der fassadenbildenden Elemente vorgesehen ist.

Im Folgenden sollen weitere Einzelheiten und Merkmale der Erfindung anhand von Beispielen näher erläutert werden. Die abgebildeten Beispiele sollen die Erfindung jedoch nicht einschränken, sondern nur erläutern. Es zeigen in schematischer Darstellung:
- Figur 1.:: Innenwandaufbau, Horizontalschnitt
- Figur 2:: Innenwandaufbau, Vertikalschnitt
- Figur.3:: Wirkungsweise von Kapillarrohren mit ovalem Rohrquerschnitt
- Figur 4:: Wandheizung mit zusätzlichen Temperierungsleitungen
- Figur 6:: Klimaverhältnisse bei hoher Außentemperatur

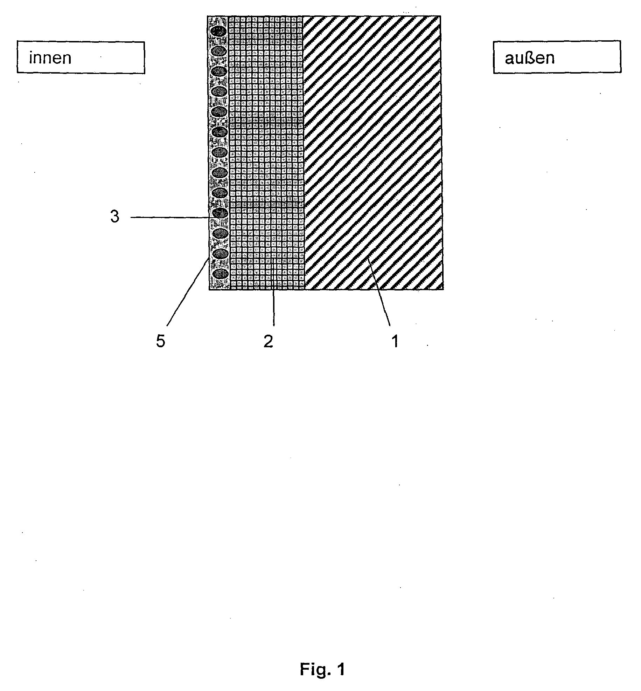

Figur 1 zeigte einen horizontal Schnitt durch den erfindungsgemäßen lnnenwandaufbau, der aus drei Schichten besteht. Die erste Schicht ist die Außenwand 1 auf der innenseitig die Innendämmung 2 anliegt. Auf der in das Innere des Gebäudes gerichteten Seite der lnnendämmung 2 liegt die Wandschicht 5 mit den darin eingelassenen Kapillarrohren 3 an. Die Innendämmung 2 besteht aus einem porösen Material, das diffusionsoffen und kapillaraktiv ist. Als Materialien kommen Mineralsilikate genauso in Frage wie poröse Tonmaterialien oder Gasbeton. Das Material der Innenwandschicht 3, dass die Kapillarrohre 5 umgibt, ist vorzugsweise Kalk- oder Lehmputz. Beide Putzarten sind ebenfalls kapillaraktiv und diffusionsoffen. Durch die gleichmäßige und flächige Erwärmung der Innenwandschicht 3 durch das in den Kapillarrohren 5 fließende Heizmedium wird die Dampfleitfähigkeit der Innenwandschicht für den sich im Gebäudeinneren befindlichen Wasserdampf verringert. Da der Sättigungsdampfdruck nicht mehr erreicht wird, kommt es in den hinter der Innenwandschicht 5 liegenden Bereichen erst bei tieferen Temperaturen zur Kondensation des sich dort befindlichen Wasserdampfes. Dadurch kann auf den Einbau einer Dampfsperre verzichtet werden. Im gezeigtem Beispiel ist die Innendämmung 2 etwa zwei bis dreifach so stark wie die Innenwandschicht 5. Dadurch ist sicher gestellt, dass die auch als Puffer zur Aufnahme von Feuchtigkeit dienende Innendämmung 2 eine ausreichende Aufnahmekapazität hat. Außerdem ist im gezeigtem Beispiel zusehen, dass die Kapillarrohre 3 einen ovalen Querschnitt aufweisen und so angeordnet sind, dass die von innen abgegebene Wärme sich zu nächst eher innerhalb der Innenwandschicht 5, d.h. senkrecht zur Wandoberfläche ausbreitet.

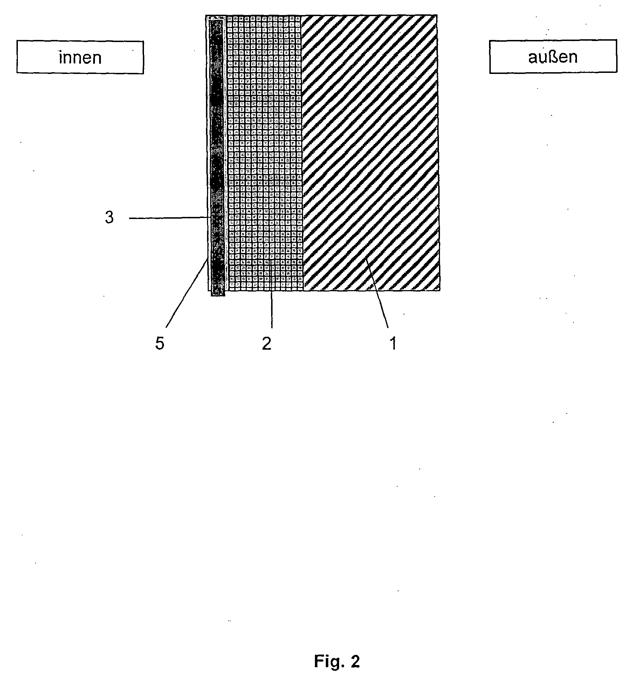

Figur 2 zeigt den Innenwandaufbau aus Figur 1 im vertikal Schnitt.

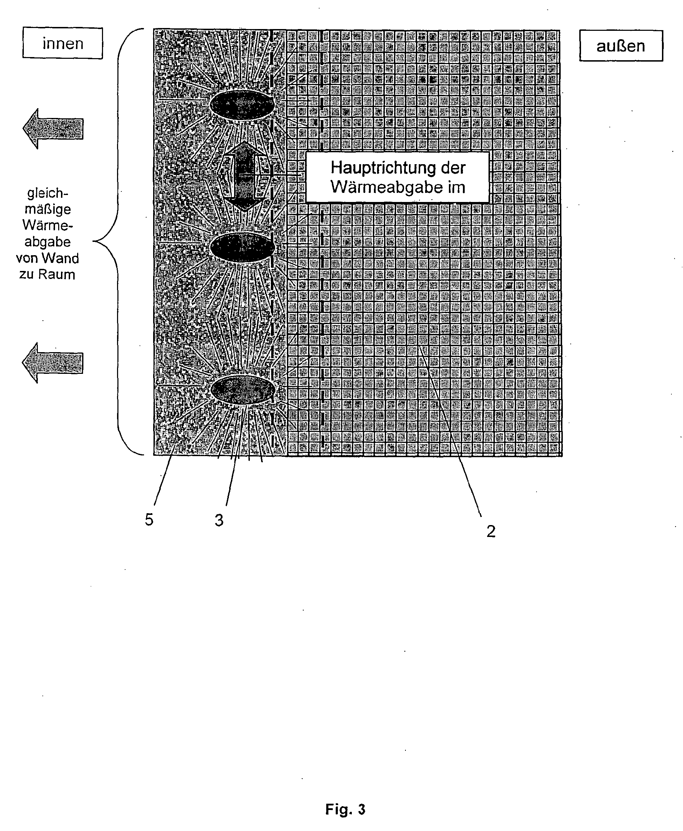

In Figur 3 wird in einem Horizontatschnitt verdeutlicht, dass mit der Verwendung von Kapillarrohren 3 mit ovalem Querschnitt bei entsprechender Anordnung eine gleichmäßige Erwärmung der Innenwandschicht 5 erreichbar ist. Verbunden mit der gleichmäßigen Erwärmung der Innenwandschicht 5 ist die gleichmäßige Wärmeabgabe in das Rauminnere. Die Richtung und Intensität der Wärmeabgabe wird durch entsprechende Pfeile symbolisiert. Mit dem Bezugszeichen 6 sind die Versorgungsleitungen bezeichnet, die in horizontaler Richtung verlaufen an welche die vertikal verlaufenden Kapillarrohre 3 angeschlossen sind.

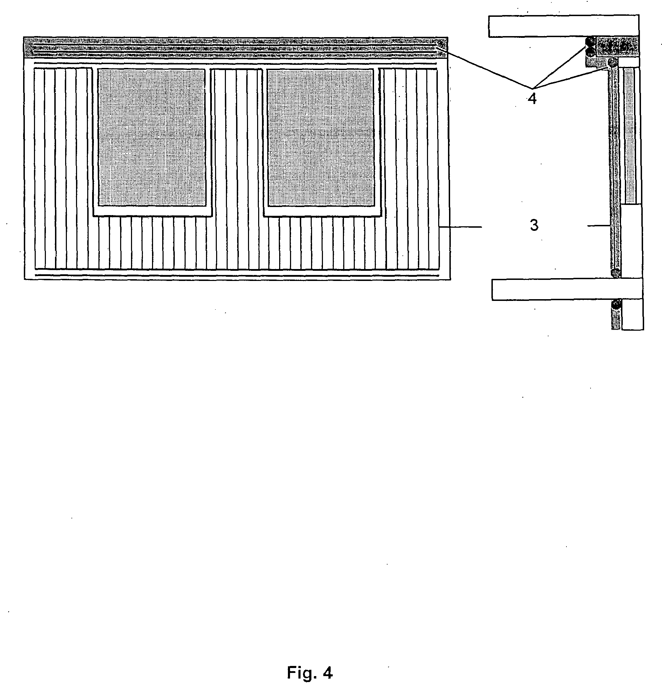

Figur 4 zeigt die zur Temperierung im Deckenbereich und im Bodenbereich vorgesehenen zusätzlichen Rohre 4. Die Kapillarrohre 3 sind flächig verlegt.

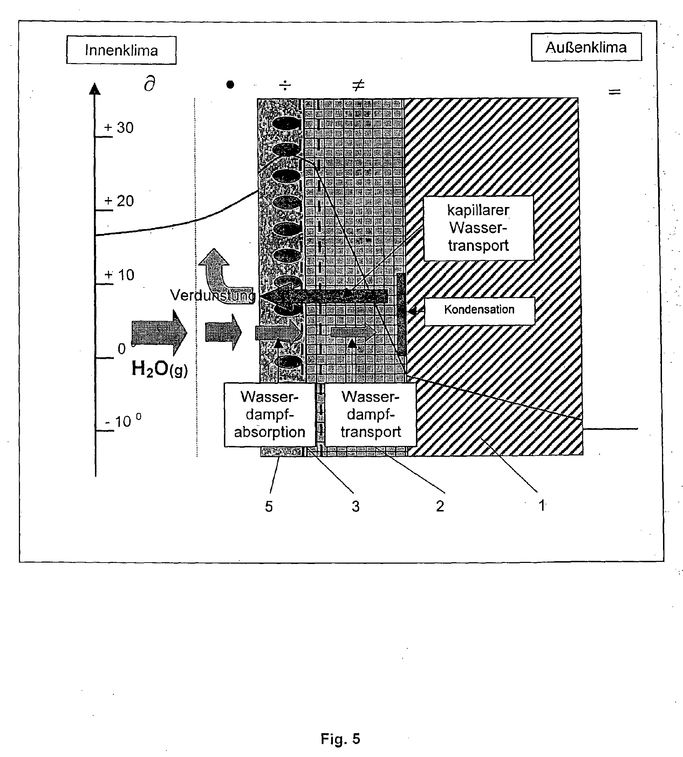

Figur 6 veranschaulicht in einem vertikal Schnitt des erfindungsgemäßen Innenwandaufbaus, wie zwischen der Innendämmung 2 und der Außenwand 1 entstandenes Kondensationswasser durch die jeweils diffusionsoffene Innendämmung 2 und Innenwandschicht 3 im Gebäudeinneren zur Verdunstung geführt werden kann. Die beiden kapillaraktiven Schichten 2, 5 auf der Innenseite der Außenwand stellen sicher, dass sich im erfindungsgemäßen Innenwandaufbau keine Feuchtigkeit festsetzt. Der mit Hilfe der Kapillarrohre 3 aufheizbaren Innenwandschicht 5 kommt dabei eine besondere Bedeutung zu. Zwar ist die Dampfleitfähigkeit der aus Kalk- oder aus Lehmputz aufgebauten Innenwandschicht aufgrund der Erwärmung gering, sie bleibt dabei allerdings diffusionsoffen und kapillaraktiv, sodäss das zwischen Innendämmung 2 und Außenwand 1 angefallene Kondensationswasser nach wie vor nach innen abführbar ist. Die Anbringung einer Dampfsperre würde diese vorteilhafte Wirkung der ausheizbaren Innenwandschicht 5 von vornherein unterbinden.

### Bezugszeichen,

- 1.: Außenwand
- 2.: Innendämmung
- 3.: Kapillarrohre
- 4.: Zusatzrohre
- 5.: lnnenwandschicht

## Patentansprüche

1. Innenwandaufbau zur innenseitigen Dämmung von Gebäudeauβenwänden (1) sowie von Gebäudewänden, die temperierte Gebäudebereiche von nicht temperierten Gebäudebereichen abgrenzen, **dadurch gekennzeichnet, dass**
- eine Innendämmung (2), auf der Innenseite der Außenwand (1) anliegt, und
- eine Innenwandschicht (5) auf der in Richtung des temperierten Gebäudeteils zeigenden Seite der Innendämmung (2) anliegt, wobei
- sich innerhalb der Innenwandschicht (5) eine Vielzahl von Rohren (3, 4) befinden, die mit einem flüssigen Heiz- oder Kühlmedium beaufschlagbar sind, und dass
- die Innendämmung (2) aus einem diffusionsoffenen und kapillaraktiven Material besteht.

2. lnnenwandaufbau nach Anspruch 1, **dadurch gekennzeichnet, dass** die Innendämmung (2) aus
- einem Mineralschaumstein und/oder
- Gasbeton und/oder
- einem Tonbaustoff mit poröser Struktur
besteht.

3. Innenwandaufbau nach einem der Ansprüche 1 und 2, **dadurch gekennzeichnet, dass** die Innendämmung (2) aus einem Mineralschaumstein mit einer offenen und/oder geschlossenen Porenstruktur besteht.

4. Innenwandaufbau nach einem der vorhergehenden Ansprüche,
**dadurch gekennzeichnet, dass** die im Mineralschaumstein der Innendämmung (2) enthaltenen Silicätmineralien im wesentlichen aus Alkalisilikaten und/oder Erdalkalisilikaten und/oder Aluminiumoxidsilikate und/oder Ammoniumsilikaten bestehen.

5. Innenwandaufbau einem der vorhergehenden Ansprüche, **dadurch gekennzeichnet, dass** der Mineralschaurnstein der Innendämmung (2) aus einem Gemisch von Siliziumoxid und Silicatmineralien besteht.

6. lnnenwandaufbau nach einem der vorhergehenden Ansprüche,
**dadurch gekennzeichnet, dass** die Innendämmung (2) eine hohe Wärmedämmung aufweist.

7. Innenwandaufbau nach einem der vorhergehenden Ansprüche,
**dadurch gekennzeichnet, dass** die Innenwandschicht (5) aus einem diffusionsoffenen und/oder kapillaraktiven Material besteht.

8. Innenwandaufbau nach einem der vorhergehenden Ansprüche,
**dadurch gekennzeichnet, dass** die Innenwandschicht (5) eine hohe Wärmeleitfähigkeit aufweist.

9. Innenwandaufbau nach einem der vorhergehenden Ansprüche,
**dadurch gekennzeichnet, dass** die Innenwandschicht (5) aus Lehmputz und/oder Kalkputz besteht.

10. Innenwandaufbau nach einem der vorhergehenden Ansprüche,
**dadurch gekennzeichnet, dass** in die Innenwandschicht (5) mit zufälliger Orientierung dünne elastische Fasern, die eine hohe Festigkeit aufweisen, eingelassen sind.

11. Innenwandaufbau nach einem der vorhergehenden Ansprüche,
**dadurch gekennzeichnet, dass** die Rohre (3) zur Führung eines Heiz- oder Kühlmediums in der Innenwandschicht (5) Kapillarrohre (3) sind.

12. Innenwandaufbau nach einem der vorhergehenden Ansprüche,
**dadurch gekennzeichnet, dass** die Kapillarrohre (3) einem ovalem Querschnitt aufweisen.

13. Innenwandaufbau nach Anspruch 13, **dadurch gekennzeichnet,**
**dass**
- die Längsachsen der Kapillarrohre mit dem ovalen Querschnitt jeweils parallel zur Oberfläche der Innenwandschicht (5) ausgerichtet sind und
- der Rohrquerschnitt mit der größeren Ausdehnung jeweils senkrecht zur Oberfläche der Innenwandschicht (5) ausgerichtet ist.

14. Innenwandaufbau nach einem der vorhergehenden Ansprüche,
**dadurch gekennzeichnet, dass** die Rohre (3) zur Führung eines Heiz- oder Kühlmediums vertikal ausgerichtete Kapillarrohre (3) sind, die obenends und untenends mit horizontal ausgerichteten Verteiler- bzw. Sammelrohren durchflussoffen verbunden sind.

15. lnnenwandaufbau nach einem der vorhergehenden Ansprüche,
**dadurch gekennzeichnet, dass** die zueinander parallel verlaufenden Kapillarrohre (3) durch zusätzliche querverlaufende Verbindungen oder Kapillarrohre, die zur mechanischen Stabilisierung mit den anderen Kapillarrohren ein mattenartiges Netz aufbauen, verbunden sind.

16. Innenwandaufbau nach einem der vorhergehenden Ansprüche,
**dadurch gekennzeichnet, dass** die Beabstandung der Kapillarrohre (3) so bemessen ist, dass Inneriwandschicht (5) in der Ebene, in der die Kapillarrohre (3) liegen, mit einheitlicher Temperatur temperierbar ist.

17. Innenwandaufbau nach einem der vorhergehenden Ansprüche,
**dadurch gekennzeichnet, dass** die Stärke der Innenwandschicht (5) in Abhängigkeit von der Stärke der Rohre (3, 4) so bemessen ist, dass die Innenwandschicht (5) möglichst gleichmäßig temperierbar ist.

18. Innenwandaufbau nach einem der vorhergehenden Ansprüche,
**dadurch gekennzeichnet, dass** die Stärke der Innendämmung (2) mindestens der dreifachen Stärke der Innenwandschicht (5) entspricht.

19. Innenwandaufbau nach einem der vorhergehenden Ansprüche,
**dadurch gekennzeichnet, dass** im Decken- und Bodenbereich, sowie in den die Fensterrahmen umgebenden Bereichen innerhalb der Innenwandschicht (5) zur zusätzlichen Temperierung Rohre (4) vorgesehen sind, deren Innendurchmesser kreisrund ist und den Innendurchmesser der Kapillarrohre (3) um das mindestens Fünffache übersteigt.

20. Innenwandaufbau nach einem der vorhergehenden Ansprüche,
**dadurch gekennzeichnet, dass** die zusätzlichen Rohre (4) eingangsseitig mit dem Rücklauf der Kapillarrohre (3) verbunden sind.

21. lnnenwandaufbau nach einem der vorhergehenden Ansprüche,
**dadurch gekennzeichnet, dass** die Vorlauftemperatur des Mediums zur Beaufschlagung der Kapillarrohre (3) in Abhängigkeit von der Temperatur des rücklaufenden Mediums regelbar ist, wobei die Rücklauftemperatur variabel festlegbar ist.

22. Innenwandaufbau nach einem der vorhergehenden Ansprüche,
**dadurch gekennzeichnet, dass** die Zuleitung der Kapillarrohre mit einem Niedertemperatur-Wärmesystem, insbesondere mit Erdsonden verbunden sind.

23. Innenwandaufbau nach einem der vorhergehenden Ansprüche,
**dadurch gekennzeichnet, dass** die Kapillarrohre (3) und die Rohre (4) aus Kupfer und/oder aus Kunststoff bestehen.

24. Innenwandaufbau nach einem der vorhergehenden Ansprüche,
**dadurch gekennzeichnet, dass** das in den Kapillarrohren (3) und in den Rohren (4) geführte Heiz- oder Kühlmedium Wasser ist.

25. Innenwandaufbau nach einem der vorhergehenden Ansprüche,
**dadurch gekennzeichnet, dass** auf den Außenseiten der Rohre (4) und/oder der Kapillarrohre (3) eine Vielzahl stift- oder dornenartiger Fortsätzen befestigt sind, die zur Verbesserung des Wärmetransports in die zwischen den Kapillarrohren (3) bzw. zwischen den Rohren (4) liegenden Bereiche der Innnenwandschicht (5) parallel zur Wandfläche ausgerichtet sind.

26. Innenwandaufbau nach einem der vorhergehenden Ansprüche,
**dadurch gekennzeichnet, dass** die Bestandteile des Innenwandaufbaus in einem durch industrielle Massenfertigung herstellbaren sowie modulartig einbau- und verwendbaren Bauelement vereint sind.

27. Verfahren unter Anwendungen eines Innenwandaufbaus nach einem der Ansprüche 1 bis 27, **dadurch gekennzeichnet, dass** die Vorlauftemperatur des Mediums zur Beaufschlagung der Kapillarrohre (3) und der zusätzlichen Rohre (4) durch die Temperatur des rücklaufenden Mediums geregelt wird, wobei die Rücklauftemperatur variabel festgelegt wird.

28. Verfahren zur Bausanierung unter Verwendung eines Innenwandaufbaus nach einem der vorhergehenden Ansprüche, **dadurch gekennzeichnet, dass**
- auf der Innenseite der Außenwand (1) eines Gebäudes mit oder ohne Beabstandung eine Innendämmung (2) angebracht wird, und
auf der in das Rauminnere zeigenden Seite der Innendämmung (2) eine Vielzahl von Rohren (3, 4), die mit einem flüssigen Heiz- oder Kühlmedium beaufschlagbar sind, angebracht werden,
das aushärtbare Material der Innenwandschicht (5) auf die in Richtung des temperierten Gebäudeteils zeigende Oberseite der Innendämmung (2) mindestens solange aufgetragen wird, bis die Rohre (3, 4) überdeckt sind.

29. Verfahren zur Herstellung von Bauelementen für den Fertighausbau mit einem Wandaufbau nach einem der vorhergehenden Ansprüche, **dadurch gekennzeichnet, dass**
- auf der Innenseite der Außenwand (1) mit oder ohne Beabstandung eine Innendämmung (2) angebracht wird, und
- auf der in das Rauminnere zeigenden Seite der Innendämmung (2) eine Vielzahl von Rohren (3, 4), die mit einem flüssigen Heiz- oder Kühlmedium beaufschlagbar sind, angebracht
werden,
das aushärtbare Material der Innenwandschicht (5) auf die in Richtung des temperierten Gebäudeteils zeigende Oberseite der Innendämmung (2) mindestens solange aufgetragen wird, bis die Rohre (3, 4) überdeckt sind.
